# EUROPÄISCHE PATENTSCHRIFT

(11) **EP 3 774 481 B1**
(45) Veröffentlichungstag und Bekanntmachung des Hinweises auf die Patenterteilung: **25.05.2022**
(21) Anmeldenummer: 19723681.3
(22) Anmeldetag: 25.04.2019
(51) Int. Cl.: B61C 3/00, B61C 17/00, B61F 1/00

(54) **ANORDNUNG ZUR POSITIONIERUNG EINES TRANSFORMATORS IN EINEM SCHIENENFAHRZEUG**
ARRANGEMENT FOR POSITIONING A TRANSFORMER IN A RAIL VEHICLE
SYSTÈME DE POSITIONNEMENT D'UN TRANSFORMATEUR DANS UN VÉHICULE FERROVIAIRE

(30) Priorität: 15.05.2018 DE 102018207473; 17.07.2018 DE 102018211861
(43) Veröffentlichungstag der Anmeldung: 17.02.2021
(73) Patentinhaber: Siemens Mobility GmbH, 81739 München (DE)
(72) Erfinder: STOFF, Helmut, 83627 Warngau (DE)
(86) Internationale Anmeldenummer: PCT/EP2019/060670
(87) Internationale Veröffentlichungsnummer: WO 2019/219347

(56) Entgegenhaltungen:
- CN-A- 106 080 623
- DE-A1-102014 113 829
- JP-A- 2007 182 208

## Beschreibung

Die Erfindung betrifft eine Anordnung zur Positionierung eines Transformators in einem Schienenfahrzeug, wie sie beispielswiese in der Druckschrift DE 10 2018 207 473 A1 (Aktenzeichen DE 102018207473.9, Anmeldetag 15.05.2018) beschrieben ist.

Gemäß den dort beschriebenen Ausführungen müssen Schienenfahrzeuge (z.B. elektrische Lokomotiven und Diesellokomotiven) hinsichtlich ihrer Gewichtsverteilung sehr genau austariert werden, um größere Achslastunterschiede und Radlastunterschiede zu vermeiden. Um dies zu erreichen, werden herkömmlicherweise der Aufbau und die Verteilung der Komponenten der Lokomotiven bereits bei der Konstruktion so gewählt, dass ein vorbestimmter Schwerpunkt möglichst mittig im Schienenfahrzeug erreicht wird.

Nach der Montage der Lokomotive können Abweichungen in der Position des Schwerpunkts in Längsrichtung des Schienenfahrzeugs (nachfolgend als x-Richtung bezeichnet) oder quer zur Längsrichtung des Schienenfahrzeugs (nachfolgend als y-Richtung bezeichnet) mit Hilfe von zusätzlich hinzugefügten Ballastgewichten kompensiert werden. Dies ist mit Blick auf das zulässige Gesamtgewicht des Schienenfahrzeugs wenig optimal.

Um diese Problematik zu umgehen, wurde die Verwendung eines Transformatorträgers vorgeschlagen. Dieser Transformatorträger ist am Untergestell des Schienenfahrzeugs, insbesondere zwischen den Drehgestellen, angeordnet und hält den Transformator an einer Position im Schienenfahrzeug. Der Transformatorträger ist derart ausgebildet, dass die Position des Transformators relativ zum Untergestell des Schienenfahrzeugs in einer Montagephase genauer eingestellt werden kann. Dadurch wird erreicht, dass durch eine genau einstellbare Position des Transformators im Schienenfahrzeug eine vorbestimmte Schwerpunktposition eingestellt bzw. realisiert wird.

In der Praxis ist es sinnvoll, den einstellbaren Transformatorträger in einem ersten Montageschritt ohne Transformator im Schienenfahrzeug zu montieren und die benötigte, vorbestimmte Position des Transformators über den Transformatorträger genau einzustellen. In einem zweiten Montageschritt wird dann der Transformator auf dem Träger fixiert, so dass er in der gewünschten Position im Schienenfahrzeug angeordnet ist.

Bei Schienenfahrzeugen, wie beispielsweise elektrischen Lokomotiven, weist der Transformator üblicherweise ein Gewicht von circa 15% der Masse des Schienenfahrzeugs auf. Ein Transformator kann daher ein Gewicht von bis zu 15 Tonnen aufweisen. Dieses hohe Gewicht erschwert bzw. unterbindet eine nach dem zweiten Montageschritt gewünschte weitere Positionsänderung des Transformators, um beispielsweise eine weitere Optimierung bzw. Feinabstimmung am Schwerpunkt des Schienenfahrzeugs vorzunehmen.

Aus den Druckschriften CN 106 080 623 A und JP 2007 182 208 A sind weitere Lösungen zur Befestigung eines Trafos an einem Schienenfahrzeug bekannt.

Es ist daher die Aufgabe der vorliegenden Erfindung, eine Anordnung zur variablen Positionierung eines Transformators in einem Schienenfahrzeug anzugeben, mit der eine Positionsänderung des Transformators nach Montage im Schienenfahrzeug ermöglich wird.

Diese Aufgabe wird durch die Merkmale des Anspruchs 1 gelöst. Vorteilhafte Weiterbildungen sind in den abhängigen Ansprüchen angegeben.

Die Erfindung betrifft eine Anordnung zur Positionierung eines Transformators in einem Schienenfahrzeug. Das Schienenfahrzeug weist einen Transformatorträger auf, der den Transformator an einer vorbestimmten Position im Schienenfahrzeug befestigt. Der Transformatorträger ist an einem Untergestell des Schienenfahrzeugs angeordnet. Der Transformator ist über eine Führung mit dem Transformatorträger verbunden, wobei durch die Führung eine Positionsänderung des Transformators relativ zum Untergestell des Schienenfahrzeugs einstellbar ist. Die Führung ist eine Gleitführung, die als hydrostatische oder als aerostatische Gleitführung ausgebildet ist.

In einer bevorzugten Weiterbildung ist die Gleitführung eine Linearführung, bei der zugehörige Führungselemente nicht durch Wälzkörper getrennt werden.

Eine aerostatische Gleitführung bezeichnet eine Führung (mit einem Lager) mit einem aktiven Druckluftkreislauf. Der Druckluftkreislauf wird bevorzugt über eine Pumpe aufrechterhalten, mit deren Hilfe Druckluft über einen Lagerspalt in die Gleitführung geführt wird.

Eine hydrostatische Gleitführung bezeichnet eine Führung (mit einem Lager) mit einem aktiven Schmierstoffkreislauf. Der Schmierstoffkreislauf wird bevorzugt über eine Pumpe aufrechterhalten, mit deren Hilfe ein Schmierstoff, bevorzugt Öl, unter Druck über einen Lagerspalt in die Gleitführung geführt wird.

In einer bevorzugten Weiterbildung ist die Gleitführung als Schwalbenschwanzführung ausgebildet.

Die Schwalbenschwanzführung ist eine formschlüssige, lineare Gleitführung.

In einer bevorzugten Weiterbildung beinhaltet der Transformatorträger eine erste (hydrostatische oder aerostatische) Gleitführung, die eine Positionsveränderung des Transformators in einer Längsrichtung (x-Richtung) des Schienenfahrzeugs ermöglicht.

In einer bevorzugten Weiterbildung beinhaltet der Transformatorträger eine zweite (hydrostatische oder aerostatische) Gleitführung, die eine Positionsveränderung des Transformators quer zur Längsrichtung (y-Richtung) des Schienenfahrzeugs ermöglicht.

In einer bevorzugten Weiterbildung weist der Transformatorträger einen Gleitschuh auf, der einerseits mit der Gleitführung und andererseits mit einer Flanschplatte des Transformators verbunden ist.

In einer bevorzugten Weiterbildung ist die Gleitführung des Transformatorträgers über eine geschweißte Konsole mit dem Untergestell des Schienenfahrzeugs verbunden.

Durch die erfindungsgemäße Anordnung wird erreicht, dass der Transformator nach erfolgter Montage bzw. Positionierung im Schienenfahrzeug und ohne Ausbau von Komponenten stufenlos verschiebbar ist.

Dadurch werden Positions-Feinabstimmungen des Transformators und dadurch wiederum Feinabstimmungen des Schwerpunkts des Schienenfahrzeugs ermöglicht.

Die erfindungsgemäße Anordnung verwirklicht eine elegante Möglichkeit, den Transformator im eingebauten Zustand, insbesondere nach erfolgter Verwiegung und nach Bestimmung eines Schwerpunkt-Versatzes, in seiner Position solange anzupassen und zu optimieren, bis der ermittelte Schwerpunkt-Versatz minimiert oder vollständig ausgeglichen ist.

Durch die erfindungsgemäße Anordnung werden flexible Schwerpunkt-Korrekturen am Schienenfahrzeug zu jeder Zeit ermöglicht - nicht nur während der ersten Montage des Schienenfahrzeugs, sondern auch nach einer gewissen Betriebsdauer des Schienenfahrzeugs in einer Wartungsphase.

Durch die erfindungsgemäße Anordnung werden Variationen von Ausrüstungsgegenständen des Schienenfahrzeugs und damit eine Projektvielfalt ermöglicht. Werden derartige Ausrüstungsgegenstände dem Schienenfahrzeug hinzugefügt oder werden diese aus dem Schienenfahrzeug entfernt, so wird die Lage des Schwerpunkts des Scheinfahrzeugs verändert. Diese Änderung wiederum wird mit Hilfe der erfindungsgemäßen Anordnung reduziert bzw. kompensiert.

Nachfolgend wird die vorliegende Erfindung beispielhaft anhand von Zeichnungen näher beschrieben.

Dabei zeigt:
- FIG 1: wesentliche Teile der erfindungsgemäßen Anordnung in einer Seitendarstellung,
- FIG 2 bis FIG 6: die erfindungsgemäße Anordnung in verschiedenen Ansichten.

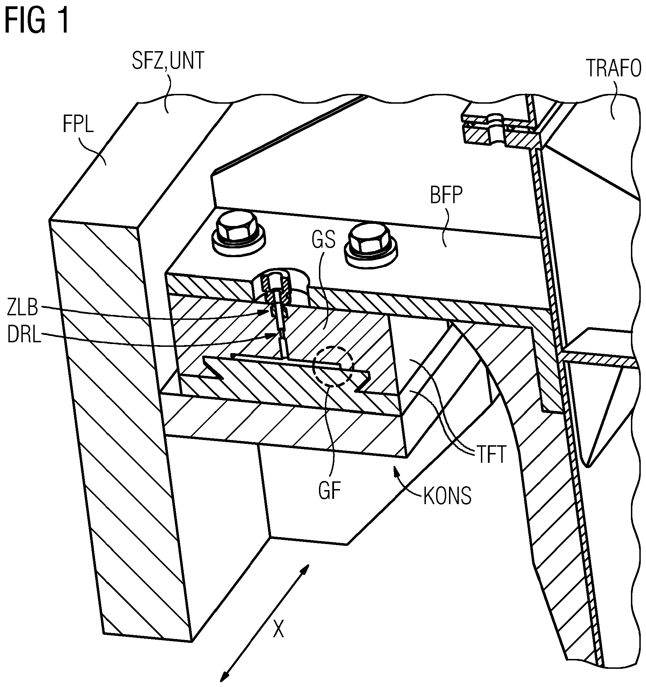

FIG 1 zeigt wesentliche Teile der erfindungsgemäßen Anordnung in einer Seitendarstellung, wobei hier beispielhaft lediglich eine Verschiebungsrichtung y für die Position des Transformators TRAFO gezeigt ist.

Ein Schienenfahrzeug SFZ bzw. dessen Untergestell UNT ist hier durch einen Bestandteil dargestellt, nämlich durch eine Flanschplatte FPL, die als Trafoquerträger verwendet wird.

Die Flanschplatte FPL definiert eine vorbestimmte, grobe Position des Transformators TRAFO. Der Transformators TRAFO ist über einen Transformatorträger TFT mit der Flanschplatte FPL verbunden.

Der Transformatorträger TFT beinhaltet eine SchwalbenschwanzFührung als Gleitführung GF, die hier als hydrostatische Gleitführung GF ausgestaltet ist.

Für die Funktionalität der hydrostatischen Gleitführung GF sind eine zentrale Zuleitungsbohrung ZLB mit Ölanschluss sowie eine Drossel DRL in der Zuleitung vorgesehen.

Der Transformatorträger weist einen Gleitschuh GS auf, der einerseits mit der Gleitführung GF und andererseits mit einer Befestigungs-Flanschplatte BFP des Transformators TRAFO verbunden ist.

Die Gleitführung GF des Transformatorträgers TFT ist über eine geschweißte Konsole KONS mit der Flanschplatte FPL und damit mit dem Untergestell des Schienenfahrzeugs verbunden.

Ein ausführungsspezifischer Vorteil liegt darin, dass der Transformator TRAFO auf der geschweißte Konsole KONS definiert und sicher aufliegt. Damit wird ein Herunterfallen des Transformators TRAFO verhindert, er ist damit quasi "verliersicher" gelagert.

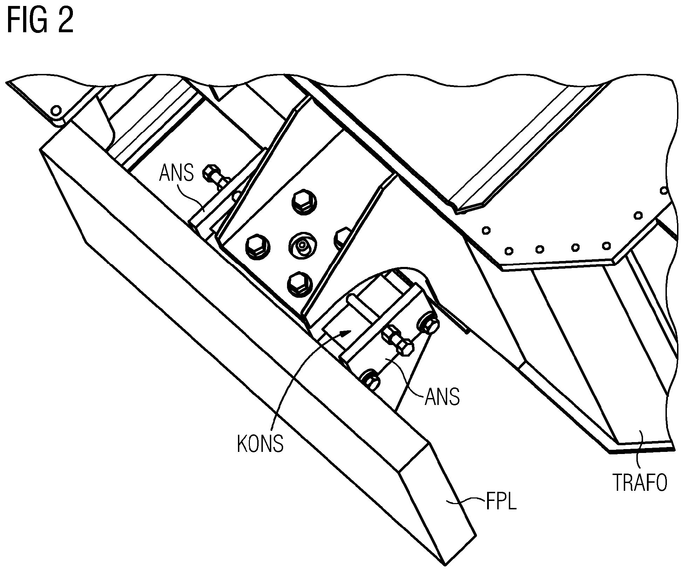

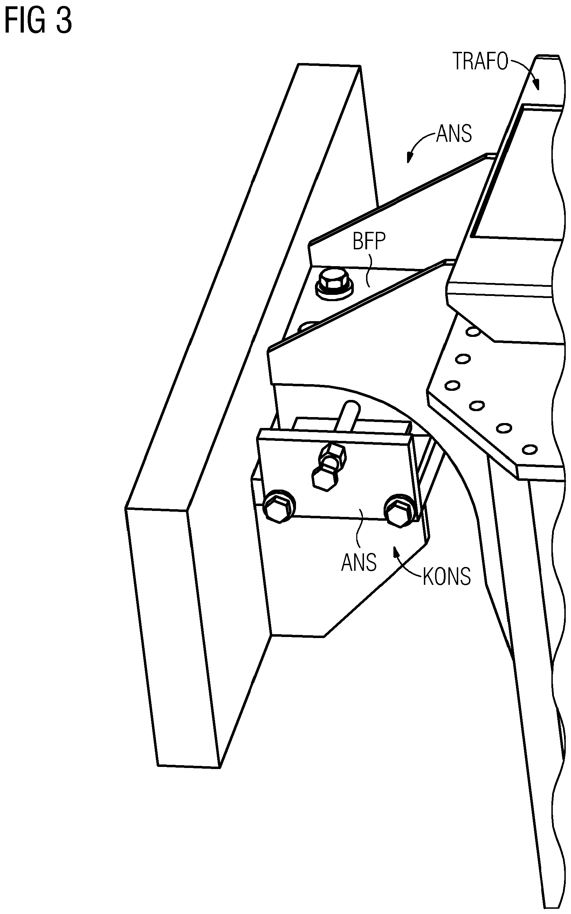

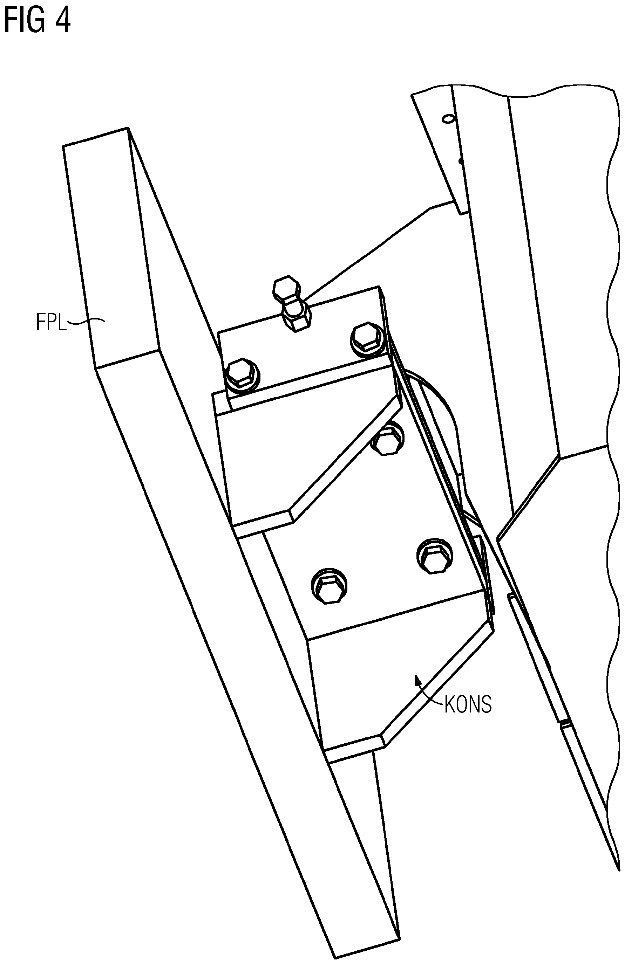

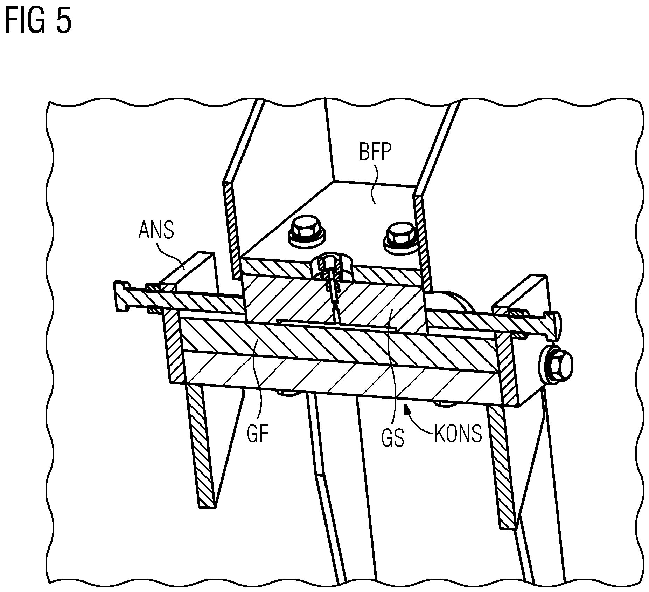

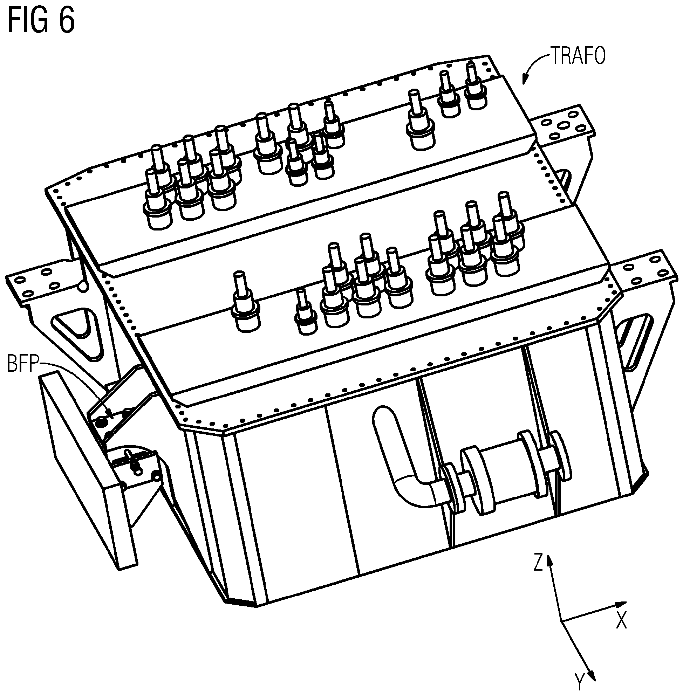

FIG 2 bis FIG 6 die erfindungsgemäße Anordnung in verschiedenen Ansichten.

FIG 2 zeigt zudem einen beidseitig flexibel einstellbaren Anschlag ANS, der hier als über Gewindestangen einstellbare Platten ausgebildet ist.

Mit Hilfe des Anschlags lässt sich die Gleitführung GF (Schwalbenschwanz) durch eine Schraubverbindung auf der geschweißten Konsole KONS befestigen. Über die Verschraubung wird die Gleitführung GF exakt parallel ausgerichtet, um eine saubere Parallelführung zu erreichen.

Zur Verschiebung des Transformators wird die Gleitführung GF mit Öldruck beaufschlagt, so dass der Transformator TRAFO mit minimiertem Kraftaufwand verschoben werden kann.

Die Verschiebung kann z.B. über weitere Stellschrauben, die an den stirnseitigen Anschlag-Platten angeordnet sind, erfolgen.

## Patentansprüche

1. Anordnung,
- mit einem Transformator und mit einem Schienenfahrzeug,
- bei der das Schienenfahrzeug einen Transformatorträger aufweist, der den Transformator an einer vorbestimmten Position im Schienenfahrzeug befestigt,
- bei der der Transformatorträger an einem Untergestell des Schienenfahrzeugs angeordnet ist,
- bei der der Transformator über eine Führung mit dem Transformatorträger verbunden ist, wobei durch die Führung eine Positionsänderung des Transformators relativ zum Untergestell des Schienenfahrzeugs einstellbar ist, **dadurch gekennzeichnet,**
- **dass** die Führung als hydrostatische oder aerostatische Gleitführung ausgestaltet ist.

2. Anordnung nach Anspruch 1, **dadurch gekennzeichnet, dass** die Gleitführung als Linearführung, insbesondere als Schwalbenschwanzführung, ausgebildet ist.

3. Anordnung nach einem der vorhergehenden Ansprüche, **dadurch gekennzeichnet,**
- **dass** der Transformatorträger eine erste Gleitführung beinhaltet, die eine Positionsveränderung des Transformators in einer Längsrichtung des Schienenfahrzeugs ermöglicht, und/oder
- **dass** der Transformatorträger eine zweite Gleitführung beinhaltet, die eine Positionsveränderung des Transformators quer zu einer Längsrichtung des Schienenfahrzeugs ermöglicht.

4. Anordnung nach einem der vorhergehenden Ansprüche, **dadurch gekennzeichnet, dass** der Transformatorträger einen Gleitschuh aufweist, der einerseits mit der Gleitführung und andererseits mit einer Flanschplatte des Transformators verbunden ist.

5. Anordnung nach einem der vorhergehenden Ansprüche, **dadurch gekennzeichnet, dass** die Gleitführung des Transformatorträgers über eine geschweißte Konsole mit dem Untergestell des Schienenfahrzeugs verbunden ist.

## Claims

1. Arrangement,
- having a transformer and having a rail vehicle,
- in which the rail vehicle has a transformer support which fastens the transformer at a predetermined position in the rail vehicle,
- in which the transformer support is arranged on an underframe of the rail vehicle,
- in which the transformer is connected to the transformer support by way of a guide, wherein a positional change of the transformer relative to the underframe of the rail vehicle can be set by means of the guide,
**characterized**
- **in that** the guide is configured as a hydrostatic or aerostatic sliding guide.

2. Arrangement according to Claim 1, **characterized in that** the sliding guide is designed as a linear guide, in particular as a dovetail guide.

3. Arrangement according to one of the preceding claims, **characterized**
- **in that** the transformer support includes a first sliding guide which allows a positional change of the transformer in a longitudinal direction of the rail vehicle, and/or
- **in that** the transformer support includes a second sliding guide which allows a positional change of the transformer transversely to a longitudinal direction of the rail vehicle.

4. Arrangement according to one of the preceding claims, **characterized in that** the transformer support has a sliding shoe which is connected to the sliding guide on one side and to a flange plate of the transformer on the other side.

5. Arrangement according to one of the preceding claims, **characterized in that** the sliding guide of the transformer support is connected to the underframe of the rail vehicle by way of a welded bracket.

## Revendications

1. Dispositif,
- avec un transformateur et avec un véhicule ferroviaire,
- dans lequel le véhicule ferroviaire présente un support de transformateur qui fixe le transformateur à une position prédéterminée dans le véhicule ferroviaire,
- dans lequel le support de transformateur est disposé au niveau d'un châssis du véhicule ferroviaire,
- dans lequel le transformateur est relié au support de transformateur par une glissière de guidage, une modification de position du transformateur par rapport au châssis du véhicule ferroviaire pouvant être réglée par la glissière de guidage, **caractérisé en ce que**
- la glissière de guidage est configurée comme un guide coulissant hydrostatique ou aérostatique.

2. Dispositif selon la revendication 1, **caractérisé en ce que** le guide coulissant est conçu comme une glissière linéaire, plus particulièrement comme une glissière en queue d'aronde.

3. Dispositif selon l'une des revendications précédentes, **caractérisé en ce que**
- le support de transformateur comprend un premier guide coulissant qui permet une modification de position du transformateur dans un sens longitudinal du véhicule ferroviaire, et / ou
- le support de transformateur comprend un deuxième guide coulissant qui permet une modification de position du transformateur transversalement à un sens longitudinal du véhicule ferroviaire.

4. Dispositif selon l'une des revendications précédentes, **caractérisé en ce que** le support de transformateur présente un patin de guidage qui est relié, d'une part, au guide coulissant et, d'autre part, à une plaque à bride du transformateur.

5. Dispositif selon l'une des revendications précédentes, **caractérisé en ce que** le guide coulissant du support de transformateur est relié par une console soudée au châssis du véhicule ferroviaire.
